# EUROPÄISCHE PATENTSCHRIFT

(11) **EP 2 917 007 B1**
(45) Veröffentlichungstag und Bekanntmachung des Hinweises auf die Patenterteilung: **13.09.2017**
(21) Anmeldenummer: 13818198.7
(22) Anmeldetag: 09.12.2013
(51) Int. Cl.: B27M 1/08, B23D 47/02, B27B 5/065, B27C 7/06

(54) **PLATTENAUFTEILANLAGE ZUM AUFTEILEN PLATTENFÖRMIGER WERKSTÜCKE**
PANEL SIZING MACHINE
DISPOSITIF DE DECOUPE DE PLAQUE

(30) Priorität: 05.02.2013 DE 102013201848
(43) Veröffentlichungstag der Anmeldung: 16.09.2015
(73) Patentinhaber: HOLZMA Plattenaufteiltechnik GmbH, 75365 Calw-Holzbronn (DE)
(72) Erfinder: SCHMIDT, Tibor, 72218 Wildberg (DE); HANSEN, Roland, 75365 Calw (DE); ZIMBAKOV, Darko, 71155 Altdorf (DE)
(74) Vertreter: DREISS Patentanwälte PartG mbB
(86) Internationale Anmeldenummer: PCT/EP2013/075877
(87) Internationale Veröffentlichungsnummer: WO 2014/121866

(56) Entgegenhaltungen:
- DE-A1- 1 552 449
- DE-A1- 3 439 739
- DE-A1- 3 521 839
- DE-A1-102007 023 664
- FR-A1- 2 409 127

## Beschreibung

Die Erfindung betrifft eine Plattenaufteilanlage nach dem Oberbegriff des Anspruchs 1. Eine solche Anlage ist aus dem Dokument FR 2409 127 A1 bekannt.

Eine Plattenaufteilanlage ist beispielsweise aus der DE 20 2010 004 119 U1 bekannt. Bei der bekannten Plattenaufteilanlage handelt es sich um eine Plattenaufteilsäge, welche einen Auflagetisch aufweist, auf dem einzelne oder zu Stapeln zusammengefügte großformatige plattenförmige Werkstücke aufliegen. Über eine Vorschubvorrichtung werden die auf dem Auflagetisch liegenden Werkstücke zu einer Aufteillinie bewegt, längs der die Werkstücke durch eine Kreissäge aufgeteilt werden. Die Aufteillinie wird in dem Auflagetisch durch einen Schlitz gebildet, durch den das Sägeblatt auftauchen und das Werkstück aufteilen kann. Die DE 35 21 839 A1 offenbart eine Tischkreissäge, bei der im Bereich des Sägeblattes in dem Tisch Absaugöffnungen vorhanden sind.

Mit einer derartigen Plattenaufteilanlage kann es vorkommen, dass ein sogenannter "Kratzschnitt" durchgeführt werden muss. Bei einem solchen wird das plattenförmige Werkstück beziehungsweise der Stapel aus plattenförmigen Werkstücken mit dem Sägeblatt nicht aufgeteilt, sondern nur am Rand bearbeitet, indem der Rand gegenüber der Aufteillinie so positioniert wird, dass das Sägeblatt nur mit einem Teil seiner Sägeblattbreite das Werkstück bearbeitet. Erwähnt ist ein solcher Kratzschnitt beispielsweise in den DE 10 2009 018 498 A1, DE 198 38 925 C1 und DE 198 95 792 A1. Ein Problem bei einem solchen Kratzschnitt ist, dass auf dem Auflagetisch eine relativ große Menge an Sägespänen liegen bleibt, die bisher vor dem weiteren Betrieb der Plattenaufteilanlage beispielsweise manuell mit einem Besen oder mit einer Druckluftpistole entfernt werden müssen. Dies kostet Zeit und führt zu einer Verschlechterung der Taktzeiten sowie einer starken Staubbelastung der Atemluft des Maschinenbedieners.

Aufgabe der vorliegenden Erfindung ist es, die Taktzeiten einer Plattenaufteilanlage auch bei der Durchführung eines Kratzschnittes zu verbessern.

Diese Aufgabe wird durch eine Plattenaufteilanlage mit den Merkmalen des Anspruchs 1 gelöst. Vorteilhafte Weiterbildungen der Erfindung sind in Unteransprüchen angegeben. Weitere wichtige Merkmale der Erfindung sind darüber hinaus in der nachfolgenden Beschreibung und in der Zeichnung offenbart.

Erfindungsgemäß ist vorgesehen, dass die Plattenaufteilanlage im Bereich der Aufteillinie mindestens eine Luftdüse aufweist, welche einen gerichteten Luftstrahl erzeugt, der in eine gewünschte Richtung parallel zum Auflagetisch weist. Die gewünschte Richtung entspricht jener Richtung, in der die beim Trennen erzeugten Späne abgefördert werden sollen. Diese ist vorzugsweise mindestens in etwa parallel zur Aufteillinie, also zur Seite des Auflagetisches hin, gerichtet. Der von der Luftdüse erzeugte Luftstrahl ist normalerweise gleichgerichtet mit dem vom Sägeblatt erzeugten Luftstrahl, so dass dieser durch den von der Luftdüse erzeugten Luftstrahl unterstützt und/oder gelenkt wird.

Durch den Luftstrahl werden beispielsweise bei einem Kratzschnitt entstehende Späne parallel zur Aufteillinie in eine gewünschte Richtung, beispielsweise zu einem seitlichen Rand des Auflagetisches transportiert, von wo sie auf einfache Weise abgefördert werden können. Der Auflagetisch selbst bleibt auch nach einem Kratzschnitt weitgehend frei von Spänen. Das bisher beispielsweise notwendige manuelle Entfernen der Späne vom Auflagetisch kann somit entfallen, wodurch die Taktzeiten der erfindungsgemäßen Plattenaufteilanlage gegenüber herkömmlichen Plattenaufteilanlagen besser sind.

Besonders effizient ist die Vorrichtung, weil die Luftdüse in einer Oberseite des Auflagetisches im Bereich der Aufteillinie angeordnet ist. Der Luftstrahl wird auf diese Weise genau dort erzeugt, wo er seine Wirkung entfalten soll, und darüber hinaus ist die Luftzuführung am Auflagetisch auch besonders einfach möglich. Es versteht sich, dass es in diesem Zusammenhang besonders vorteilhaft ist, wenn nicht nur eine Luftdüse, sondern eine Vielzahl von Luftdüsen in jenem Bereich neben der Aufteillinie angeordnet sind, der von Spänen frei gehalten werden soll.

Eine besonders einfache und preiswerte Form einer Luftdüse besteht darin, dass diese durch einen in den meisten Fällen wohl relativ zur Oberseite des Auflagetisches schrägen Luftkanal in dem Auflagetisch gebildet ist. Alternativ hierzu kann die Luftdüse auch in oder an einem Einsatz gebildet sein, der in eine Öffnung in dem Auflagetisch eingesetzt ist. Ein solcher Einsatz kann beispielsweise als ein/oder mehrteiliges Spritzgussteil sehr preiswert hergestellt werden. Die Öffnung im Auflagetisch selbst kann dann sehr einfach und gerade sein, was ebenfalls kostengünstig herzustellen ist.

Besonders vorteilhaft ist es, wenn der Auflagetisch wenigstens bereichsweise als Luftkissentisch mit einer Mehrzahl von Luftaustrittsöffnungen ausgebildet ist. In diesem Fall ist keine separate Luftversorgung erforderlich, was ebenfalls Kosten spart.

In Weiterbildung hierzu wird vorgeschlagen, dass der Auflagetisch im Bereich der Aufteillinie mindestens einen Einsatz aufweist, der in eine Öffnung des Auflagetisches eingesetzt ist und sowohl eine Luftaustrittsöffnung für die Erzeugung des Luftkisseneffekts als auch eine Luftdüse zur Erzeugung des wenigstens in etwa horizontalen und zur Seite hingerichteten Luftstrahls aufweist, mit dem die Späne zur Seite hin weggeblasen werden. Bei dieser Weiterbildung ist daher eine separate Pneumatik für die Speisung der Luftdüse nicht erforderlich, und sie hat den Vorteil, dass auch bereits existierende Plattenaufteilanlagen, die einen entsprechenden Luftkissentisch mit in Einsätzen vorhandenen Luftaustrittsöffnungen aufweisen, entsprechend nachgerüstet werden können.

In nochmaliger Weiterbildung hierzu wird vorgeschlagen, dass der Einsatz einen topfartigen und oben offenen Basisabschnitt und einen mit diesem verbundenen Schließabschnitt mit einem Deckelabschnitt und einem sich axial in den Basisabschnitt hinein erstreckenden Kragen aufweist, wobei der Deckelabschnitt an seiner Unterseite eine einseitige Ausnehmung aufweist, durch welche die Luftdüse gebildet wird. Ein solcher Einsatz kann entweder im Spritzgussverfahren einfach hergestellt werden, oder bereits existierende Einsätze können entsprechend modifiziert werden, indem die einseitige Ausnehmung am Deckelabschnitt durch Fräsen hergestellt wird.

Im Allgemeinen ist der Rand des Deckelabschnitts kreisförmig. Die Effizienz der Luftdüse wird verbessert, ohne dass zusätzliche Maßnahmen am Auflagetisch erforderlich sind, wenn der Rand des Deckelabschnitts im Bereich der Ausnehmung gerade ist. Dies kann bei einem neu hergestellten Einsatz bereits beim Spritzgießen erzeugt werden, ist aber auch bei einem bereits bestehenden Einsatz nachträglich einbringbar, indem der Rand einfach etwas abgeschliffen oder abgefräst wird.

Die Effizienz der Luftdüse wird nochmals verbessert, wenn im Bereich der Luftdüse in der Oberfläche des Auflagetisches eine Ausnehmung vorhanden ist, die in der Draufsicht eine Kontur aufweist, deren Mittelachse zur zum Auflagetisch parallelen und in die gewünschte Richtung weisenden Komponente der Mittelachse des Luftstrahls parallel ist.

Dabei kann die Ausnehmung in der Draufsicht insgesamt eine wenigstens in etwa halbkreisförmige oder kreisringförmige oder konische Kontur haben. Alle diese Konturen helfen mit, dass der Luftstrahl möglichst horizontal verläuft, ohne dass irgendein Teil über die Oberfläche beziehungsweise Oberseite des Auflagetisches übersteht.

Um die Verschmutzung des Auflagetisches durch Späne nochmals zu verringern, wird vorgeschlagen, dass die Plattenaufteilanlage eine parallel zur Aufteillinie angeordnete Abschirmeinrichtung aufweist, die einen Bereich unmittelbar seitlich von der Aufteillinie von einem seitlich weiter entfernt angeordneten Bereich abschirmt. Eine solche Abschirmeinrichtung kann beispielsweise durch einen Lamellenvorhang oder einen Bürstenvorhang gebildet werden. Die vorliegende Erfindung ist eine Ergänzung zu einer solchen meist schon vorhandenen Abschirmeinrichtung.

Schließlich wird noch vorgeschlagen, dass die erfindungsgemäße Plattenaufteilanlage eine Absaugeinrichtung umfasst, die im Bereich der Aufteillinie dort angeordnet ist, wohin die zum Auflagetisch parallele Komponente der Mittelachse des Luftstrahls der Luftdüse gerichtet ist, also meist auf einer Seite des Auflagetisches. Mittels dieser Absaugeinrichtung können also die von dem Luftstrahl beziehungsweise den Luftstrahlen an einen seitlichen Rand des Auflagetisches geblasenen Späne aufgenommen werden, ohne dass hierfür irgendein manueller Vorgang erforderlich ist. Die Effizienz der Plattenaufteilanlage wird hierdurch nochmals gesteigert.

Eine andere Weiterbildung der Erfindung zeichnet sich dadurch aus, dass die Luftdüse um eine zur Ebene des Auflagetisches orthogonale Achse drehbar ist. Dies erleichtert die Einstellung der gewünschten Strahlrichtung.

Ferner ist möglich, dass die Plattenaufteilanlage auf beiden Seiten der Aufteillinie mindestens eine Luftdüse aufweist. Damit kann der Auflagetisch besonders sauber gehalten werden.

Vorteilhaft ist ferner, wenn die Luftdüse oder die Lüftdüsen an eine eigene Druckluftzufuhr angeschlossen ist bzw. sind. Insbesondere dann, wenn ein Luftkissentisch vorhanden ist, kann so der Luftstrahl unabhängig von der Erzeugung des Luftkissens sein.

In Weiterbildung hierzu wird vorgeschlagen, dass mindestens ein Parameter der Druckluftzufuhr von einem aktuellen Betriebsparameter der Plattenaufteilanlage abhängt. Ein Parameter der Druckluftzufuhr ist beispielsweise die Geschwindigkeit der Druckluft, die Druckluftmenge, der Druck der Druckluft, aber gegebenenfalls sogar die Temperatur oder die Zusammensetzung der Druckluft. Betriebsparameter der Plattenaufteilanlage sind beispielsweise die Art des Schnittes (Kratzschnitt oder normaler Schnitt), die Position des Werkstücks oder Werkstückstapels, die Dicke des Werkstücks oder Werkstückstapels, die Vorschubgeschwindigkeit der Säge, die Art des Werkstückmaterials, etc.

Nachfolgend wird die Erfindung beispielhaft unter Bezugnahme auf die beiliegende Zeichnung erläutert. In der Zeichnung zeigen:
Figur 1 eine schematische Seitenansicht auf eine Plattenaufteilanlage mit einem Auflagetisch;
Figur 2 eine perspektivische Darstellung eines Bereichs des Auflagetisches von Figur 1 mit mehreren Luftdüsen;
Figur 3 eine schematische perspektivische Darstellung des Auflagetisches von Figur 2;
Figur 4 eine Draufsicht auf eine der Luftdüsen von Figur 2;
Figur 5 einen Schnitt längs der Linie V-V von Figur 4;
Figur 6 eine Draufsicht auf den Auflagetisch von Figur 2; und
Figuren 7 bis 16 Schnittansichten und Draufsichten unterschiedlicher alternativer Ausführungsformen von Luftdüsen.

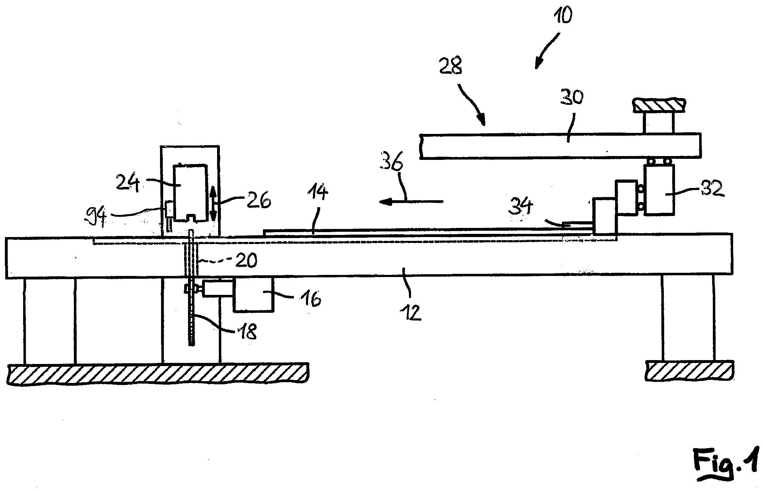

Eine Plattenaufteilanlage trägt in Figur 1 insgesamt das Bezugszeichen 10. Sie umfasst einen Auflagetisch 12, auf dem ein plattenförmiges Werkstück 14 liegt. Alternativ könnte auf dem Auflagetisch 12 auch ein ganzer Stapel von plattenförmigen Werkstücken liegen. Bei dem plattenförmigen Werkstück 14 handelt es sich um ein großformatiges Werkstück, wie es beispielsweise zum Herstellen von Möbelteilen verwendet wird.

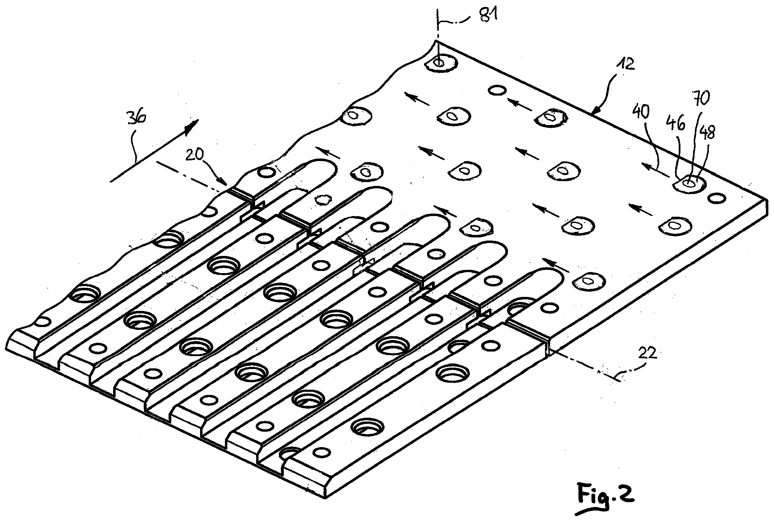

Zu der Plattenaufteilanlage 10 gehört eine Aufteileinrichtung, die vorliegend durch einen Sägewagen 16 mit einem Kreissägeblatt 18 gebildet wird. Ebenso vorhanden, jedoch nicht gezeigt, ist am Sägewagen 16 ein Vorritzerblatt. Der Sägewagen 16 kann relativ zum Auflagetisch 12 in einer senkrecht zur Zeichnungsebene stehenden Richtung bewegt werden. Im Auflagetisch 12 ist ein nur in den Figuren 1, 2 und 6 gezeichneter Sägespalt 20 vorhanden, durch den das Kreissägeblatt 18 so nach oben bewegt werden kann, dass es in einer angehobenen Arbeitsstellung leicht über die Oberseite des Auflagetisches 12 übersteht. In diesem Bereich wird also das plattenförmige Werkstück 14 im Betrieb vom Kreissägeblatt 18 gesägt. Es handelt sich um einen Bearbeitungsbereich, der sich längs einer Aufteillinie erstreckt, die in den Figuren 2, 3 und 6 durch eine strichpunktierte Linie angedeutet ist und das Bezugszeichen 22 trägt.

Der Auflagetisch 12 wird insgesamt gebildet durch 3 Teiltische, die in der Zeichnung jedoch nicht im Detail dargestellt und auch nicht separat mit Bezugszeichen versehen sind: Erstens durch einen Abnahmetisch, der als Luftkissentisch (siehe weiter unten) ausgebildet ist und auf der "stromabwärtigen" (in der Figur 1 linken) Seite vom Sägespalt 20 angeordnet ist, zweitens einen meist durch Rollen gebildeten Zuführtisch, der auf der "stromaufwärtigen" (in der Figur 1 rechten) Seite vom Sägespalt 20 angeordnet ist, und drittens den sogenannten Maschinenträger, der unmittelbar links und rechts vom Sägespalt 20, also zwischen Abnahmetisch und Zuführtisch angeordnet ist.

Oberhalb vom Sägespalt 20 ist ein sich senkrecht zur Zeichnungsebene von Figur 1 erstreckender Druckbalken 24 angeordnet, der in vertikaler Richtung entsprechend dem Doppelpfeil 26 bewegt werden kann. Während eines Sägevorgangs kann der Druckbalken 24 auf einen im Bereich der Aufteillinie 22 beziehungsweise des Sägespalts 20 befindlichen Abschnitt des plattenförmigen Werkstücks 14 abgesenkt und dieses somit während des Sägevorgangs niedergehalten werden.

Die in Figur 1 gezeigte Plattenaufteilanlage 10 umfasst ferner eine Vorschubvorrichtung 28, die ein horizontal verlaufendes Führungssystem 30 und einen an diesem gehaltenen und horizontal beweglichen Programmschieber 32 umfasst. An diesem sind mehrere Spannzangen 34 angebracht, die einen in Vorschubrichtung (Pfeil 36) gesehen hinteren Rand des plattenförmigen Werkstücks 14 greifen können.

Im Normalbetrieb der Plattenaufteilanlage 10 befindet sich das Kreissägeblatt 18 zunächst in einer abgesenkten Stellung, es ragt also nicht über die Oberseite des Auflagetisches 12 hinaus. Die Spannzangen 34 haben den hinteren Rand des plattenförmigen Werkstücks 14 gegriffen, und der Programmschieber 32 wird in Vorschubrichtung 36 so bewegt, dass das Werkstück 14 mit der vorgesehenen Schnittlinie im Bereich der Aufteillinie 22 liegt. Nun wird der Druckbalken 24 auf das plattenförmige Werkstück 14 abgesenkt und das Kreissägeblatt 18 in Drehung versetzt und nach oben bewegt. Durch einen Vorschub des Sägewagens 16 längs zur Aufteillinie 22 wird der Sägeschnitt durchgeführt.

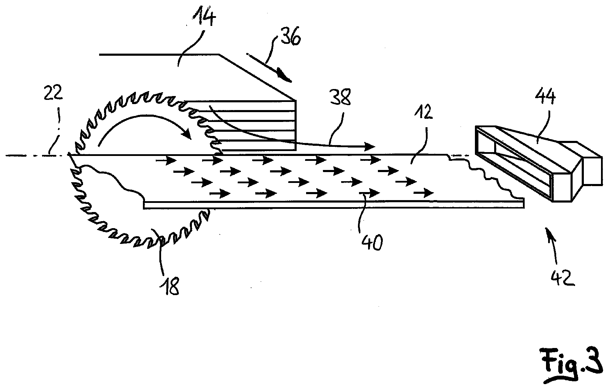

Zum Beginn eines Aufteilvorgangs wird meist ein sogenannter Besäumschnitt durchgeführt. Mit diesem wird der in Vorschubrichtung 28 gesehen vorderer Bereich des Werkstücks 14 abgeschnitten und hierdurch ein gerader und sauberer Rand hergestellt. Um möglichst wenig Material zu vergeuden, wird hierzu ein sogenannter Kratzschnitt durchgeführt. Für einen solchen wird der vordere Rand des Werkstücks 14 relativ zur Aufteillinie 22 so positioniert, dass dieser in Vorschubrichtung 36 gesehen über die Sägeblattbreite nicht hinausragt, so dass das Kreissägeblatt 18 einen Materialstreifen vom Werkstück 14 absägt (bzw. zerspant), dessen Breite geringer ist als die Breite des Kreissägeblatts 18. Dieser Vorgang ist schematisch in Figur 3 dargestellt.

Bei einem solchen Kratzschnitt wird eine relativ große Menge an Spänen erzeugt, die auf jenen Bereich des Auflagetisches 12 in der Nähe der Aufteillinie 22 fallen, der nicht vom Werkstück 14 bedeckt ist (in Figur 3 der vordere Bereich des Auflagetisches 12, in Figur 2 der hintere Bereich des Auflagetisches 12, wobei in Figur 2 das Werkstück 14 nicht dargestellt ist). Dies ist in Figur 3 durch einen Pfeil 38 angedeutet. Um zu verhindern, dass dieser Bereich des Auflagetisches 12 durch die erzeugten Späne verschmutzt wird, sind dort Luftdüsen installiert, auf die nachfolgend stärker im Detail eingegangen werden wird. Diese Luftdüsen erzeugen jeweils einen Luftstrahl, der in Figur 3 durch entsprechende Pfeile 40 angedeutet ist. Die Luftstrahlen 40 haben, wie ebenfalls nachfolgend noch stärker im Detail erläutert werden wird, eine zur Oberseite des Auflagetisches 12 parallele Komponente, die auch zur Aufteillinie 22 in etwa parallel ist. Durch diese Luftstrahlen 40 werden die Späne zu einem seitlichen Randbereich 42 des Auflagetisches 12 gelenkt bzw. transportiert, wo eine Absaugeinrichtung 44 angeordnet ist, welche die Späne absaugt. Entsprechend Figur 2 sind nur auf der "Entnahmeseite" der Aufteillinie 22 Luftdüsen 46 vorhanden. Bei einer nicht gezeigten Ausführungsform könnten aber auch auf beiden Seiten der Aufteillinie 22 Luftdüsen 46 vorhanden sein.

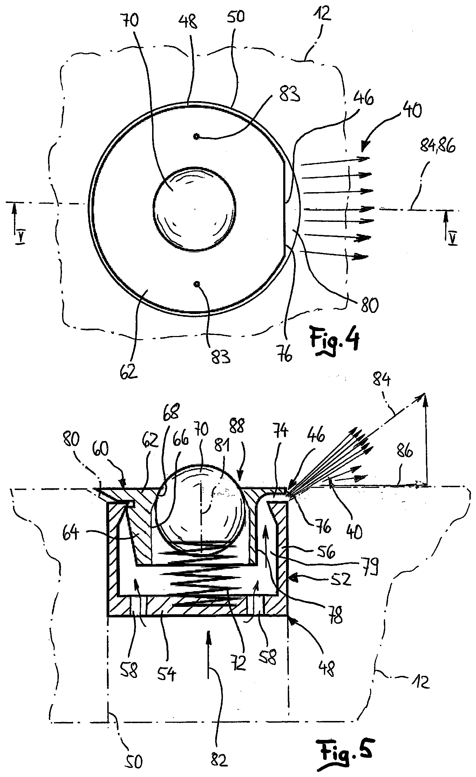

Eine erste Ausführungsform einer Luftdüse zur Erzeugung der Luftstrahlen 40 wird nun unter Bezugnahme auf die Figuren 2, 4, 5 und 6 erläutert. Dort trägt eine solche Luftdüse insgesamt das Bezugzeichen 46. Sie ist in einem zylindrischen Einsatz 48 ausgebildet, der in eine entsprechende zylindrische Öffnung 50 im Auflagetisch 12 eingesetzt ist (siehe insbesondere die Figuren 4 und 5). Der Einsatz 48 ist zweiteilig: Er weist einen topfartigen und oben offenen Basisabschnitt 52 auf, der einen Bodenabschnitt 54 und einen umlaufenden Wandabschnitt 56 aufweist. Im Bodenabschnitt 54 sind Öffnungen 58 vorhanden. Ferner gehört zu dem Einsatz 48 ein Schließabschnitt 60, der den Basisabschnitt 52 nach oben hin verschließt. Der Schließabschnitt 60 wiederum weist einen flachen und zum Bodenabschnitt 54 des Basisabschnitts 52 insgesamt parallelen Deckelabschnitt 62 auf, an den ein sich axial in den Basisabschnitt 52 hinein erstreckender Kragen 64 angeformt ist. Der Schließabschnitt 60 weist eine mittige Durchgangsöffnung 66 auf, die an ihrem in Figur 5 oberen Ende eine sphärisch ausgebildete Einengung 68 aufweist. Diese ist komplementär zu einer Ventilkugel 70, die von einer Feder 72, die sich am Bodenabschnitt 54 abstützt, gegen die Einengung 68 beaufschlagt wird.

Der Schließabschnitt 60 ist mittels einer Klipsverbindung (ohne Bezugszeichen) am Basisabschnitt 52 befestigt. Die Luftdüse 46 ist im Einsatz 48 gebildet, indem der Deckelabschnitt 62 an seiner Unterseite eine einseitige Ausnehmung 74 aufweist, und in dem ein Rand 76 des Deckelabschnitts 62 im Bereich der Ausnehmung 74 gerade, ansonsten jedoch kreisförmig ist. Eine weitere einseitige Ausnehmung 78 am Kragen 64 bildet einen Luftzufuhrkanal 79, der zu der Luftdüse 46 führt. Die Öffnung 50 im Auflagetisch 12 weist an ihrem in Figur 5 oberen Ende eine umlaufende Schräge 80 auf.

Der Einsatz 48 kann in der Öffnung 50 im Auflagetisch 12 um eine zur Ebene des Auflagetisches 12 orthogonale Achse 81 gedreht werden, um die Luftdüse 46 in der gewünschten Richtung auszurichten. Hierzu verfügt der Schließabschnitt 60 auf der Oberseite seines Deckelabschnitts 62 über zwei Bohrungen 83, in denen ein entsprechendes Einstellwerkzeug angreifen kann.

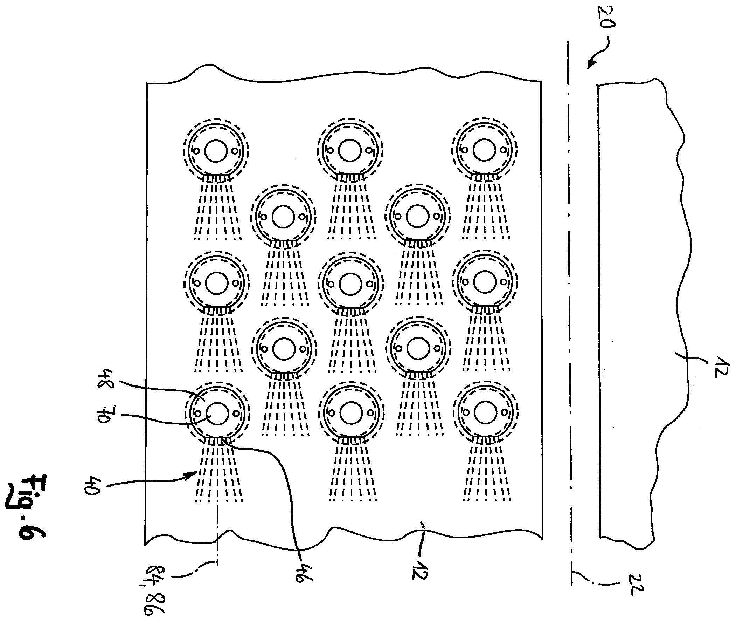

Wie aus Figur 5 ersichtlich ist, ist die Öffnung 50 an eine Druckluftzufuhr angeschlossen, was durch einen Pfeil 82 angedeutet ist. Durch die Öffnungen 58 im Bodenabschnitt 54 gelangt die Druckluft in den Luftkanal 79 und von dort zur Luftdüse 46, wo sie als Luftstrahl 40 austritt. Dieser weist eine ungefähre Mittelachse 84 auf, die eine zur Oberseite des Auflagetisches 12 parallele Komponente 86 aufweist, die zur Aufteillinie 22 in etwa parallel ist (Figur 6).

Liegt oberhalb von dem Einsatz 48 kein Werkstück 14, wird die Ventilkugel 70 gegen die Einengung 68 gedrückt, so dass an dieser Stelle keine Luft austritt. Liegt dagegen ein Werkstück 14 oberhalb vom Einsatz 48, wird die Ventilkugel 70 nach unten gedrückt, so dass Druckluft durch die Durchgangsöffnung 66 zwischen dem Kragen 64 und der Ventilkugel 70 vorbeiströmen und nach oben aus der Durchgangsöffnung 66 austreten kann. Hierdurch wird unterhalb von dem Werkstück 14 ein Luftkissen gebildet. Das obere Ende der Durchgangsöffnung 66 bzw. die Einengung 68 bildet also in diesem Falle eine Austrittsöffnung 88, und bei dem Auflagetisch 12 handelt es sich um einen Luftkissentisch.

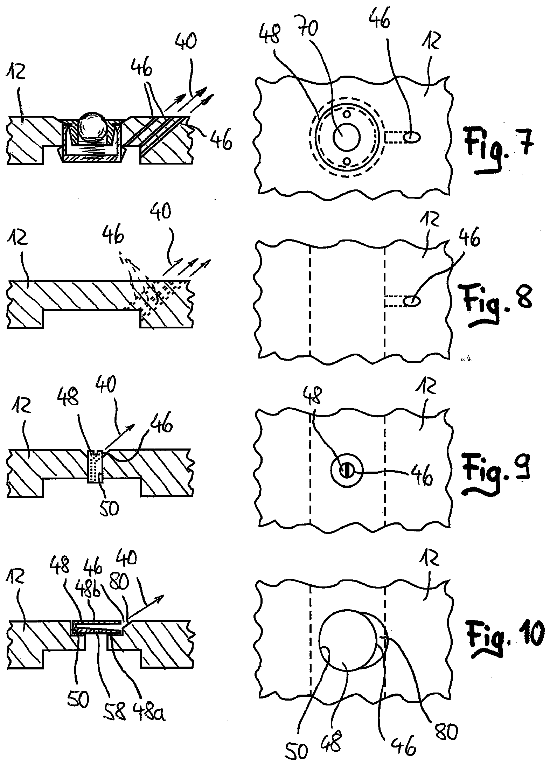

In den Figuren 7 bis 16 sind alternative Ausführungsformen von Luftdüsen 46 gezeigt. Dabei werden der Einfachheit halber für funktionsäquivalente Elemente und Bereiche die gleichen Bezugszeichen verwendet wie oben. Ferner wird darauf hingewiesen, dass aus Gründen der Übersichtlichkeit in den Figuren 7 bis 16 nicht alle sichtbaren Elemente und Bereiche mit Bezugszeichen versehen sind.

In Figur 7 wird die Luftdüse durch eine Mehrzahl von relativ zur Oberseite des Auflagetisches 12 schrägen Luftkanäle 46 in dem Auflagetisch 12 gebildet. Zusätzlich ist dort ein Einsatz 48 vorhanden, der jedoch ausschließlich zur Erzeugung eines Luftkissens für das Werkstück 14 dient. Die Ausführungsform nach Figur 8 ist ähnlich, jedoch ohne den Einsatz.

Figur 9 zeigt wiederum eine Luftdüse 46, die durch einen entsprechenden schrägen Luftkanal 46 in einem im Auflagetisch 12 angeordneten Einsatz 48 gebildet ist.

In Figur 10 ist der Einsatz 48 als runde Scheibe ausgebildet, die einen Deckel 48a und einen Boden 48b hat. Der Boden 48b weist eine Öffnung 58 auf, durch die die Druckluft über einen zwischen Deckel 48a und Boden 48b gebildeten Luftkanal 79 zur Luftdüse 46 gelangt. Gegenüber von der Luftdüse 46 weist der obere Rand der Öffnung 50 des Auflagetisches eine entsprechende und vorliegend einseitige Schräge 80 auf. Der Deckel 48a ist am Rand der Bohrung 50 mit dem Auflagetisch 12 verbunden, wobei dieser in einem Segment unterbrochen ist und dadurch einen Luftkanal bildet.

Die Luftdüsen 46 der Figuren 7 bis 10 sind an eine eigene und von den Luftaustrittsöffnungen 88 der Luftkissentisches unabhängige Druckluftzufuhr 82 angeschlossen. Mindestens ein Parameter der Druckluftzufuhr 82 hängt dabei von einem aktuellen Betriebsparameter der Plattenaufteilanlage 10 ab. Ein Parameter der Druckluftzufuhr 82 ist beispielsweise die Geschwindigkeit der Druckluft, die Druckluftmenge, der Druck der Druckluft, aber gegebenenfalls sogar die Temperatur oder die Zusammensetzung der Druckluft. Betriebsparameter der Plattenaufteilanlage 10 sind beispielsweise die Art des Schnittes (Kratzschnitt oder normaler Schnitt), die Position des Werkstücks 14 oder Werkstückstapels, die Dicke des Werkstücks 14 oder Werkstückstapels, die Vorschubgeschwindigkeit der Säge 18, die Art des Werkstückmaterials, etc.

Hierzu verfügt die Plattenaufteilanlage erforderlichenfalls über entsprechende Sensoren (nicht dargestellt), mit denen bestimmte Betriebsparameter erfasst werden können, und über eine (nicht dargestellte) Steuer- und/oder Regeleinrichtung zur Steuerung und/oder Regelung der Druckluftzufuhr 82. Beispielsweise kann eine Drehzahl eines Gebläsemotors der Druckluftzufuhr 82 veränderbar sein, oder es kann eine Steuerung/Regelung über Ventile erfolgen, etc.

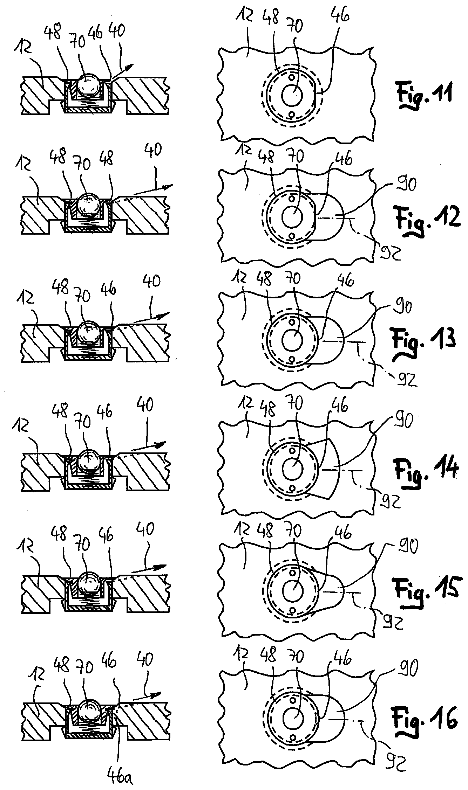

Die Figuren 11 und 12 zeigen jeweils Einsätze 48, die weitgehend identisch sind zu jenen der Figuren 4 bis 6, die Figuren 13 bis 15 jedoch Einsätze 48 mit einem durchgehend runden Rand. Die Einsätze 48 der Figuren 11 bis 15 sind in der Öffnung 50 im Auflagetisch 12 jedoch nicht im Presssitz, sondern durch eine Rastverbindung gehalten. Bei den Ausführungsformen der Figuren 12 bis 15 ist im Bereich der Luftdüse 46 in der Oberfläche des Auflagetisches 12 eine Ausnehmung 90 vorhanden, die in den dargestellten Draufsichten unterschiedliche Konturen aufweisen, wobei allen Ausnehmungen 90 gemeinsam ist, dass eine Mittelachse 92 der jeweiligen Kontur zur zum Auflagetisch 12 und zur gewünschten Richtung - hier: zur Aufteillinie 22 - parallelen Komponente 86 der Mittelachse 84 des Luftstrahls 40 parallel ist.

Die Ausnehmung 90 in Figur 12 verläuft zunächst gerade und endet mit einer halbkreisförmigen Kontur. Die Ausnehmung 90 bei der in Figur 13 dargestellten Ausführungsform ist zu jener von Figur 12 identisch, jedoch fehlt der gerade Bereich 76 des Randes des Deckelabschnitts 62. In Figur 14 weist die Ausnehmung 90 in der Draufsicht in etwa kreisringförmige Kontur auf, in Figur 15 dagegen eine insgesamt in etwa konische Kontur mit einem abgerundeten Endabschnitt.

Die Ausnehmung 90 der in Figur 16 dargestellten Ausführungsform ist identisch zu jener der Figuren 12 und 13, jedoch wird die Luftdüse 46 auf andere Art und Weise gebildet, nämlich durch eine Längsnut 46a in der inneren Mantelfläche der Öffnung 50 im Auflagetisch 12, die in den umlaufenden schrägen Rand der Öffnung 50 unterhalb vom Deckelabschnitt 62 des Einsatzes 48 mündet.

Nun wird nochmals auf Figur 1 Bezug genommen. Dort ist erkennbar, dass links vom Druckbalken 24 eine Abschirmeinrichtung 94 in Form eines Lamellenvorhangs angeordnet ist, die sich über die gesamte Länge des Druckbalkens 24 parallel zur Aufteillinie 22 erstreckt. Die Abschirmeinrichtung 94 ist beispielsweise an seitlichen Maschinenfüßen (ohne Bezugszeichen) stationär gehalten. Das untere Ende der Abschirmeinrichtung 94 liegt auf der Oberseite des Auflagetisches 12 auf. Hierdurch wird ein Bereich unmittelbar seitlich von der Aufteillinie 22 von einem seitlich weiter entfernt angeordneten Bereich abgeschirmt, und die Verschmutzung dieses weiter entfernt angeordneten Bereichs des Auflagetisches 12 durch Späne vermindert oder sogar ganz verhindert.

## Patentansprüche

1. Plattenaufteilanlage (10) zum Aufteilen plattenförmiger Werkstücke (14), mit einem Auflagetisch (12) zum Auflegen der Werkstücke (14) und mit einer Aufteillinie (22), längs der die Werkstücke (14) aufgeteilt werden, wobei sie mindestens eine an eine Druckluftzufuhr (82) angeschlossene Luftdüse (46) aufweist, welche im Auflagetisch (12) in einer Oberseite des Auflagetisches (12) in einem Bereich neben der Aufteillinie (22) angeordnet ist, **dadurch gekennzeichnet, dass** die Luftdüse (46) auf der Oberseite des Auflagetisches (12) einen aus der Luftdüse (46) austretenden gerichteten Luftstrahl (40) mit einer Mittelachse (84) erzeugt, die eine zur Oberseite des Auflagetisches (12) parallele und in eine Richtung, in der beim Trennen erzeugte Späne abgefördert werden sollen, weisende Komponente (86) aufweist.

2. Plattenaufteilanlage (10) nach Anspruch 1, **dadurch gekennzeichnet, dass** die zur Oberseite des Auflagetisches (12) parallele Komponente (86) zur Aufteillinie (22) in etwa parallel ist.

3. Plattenaufteilanlage (10) nach Anspruch 2, **dadurch gekennzeichnet, dass** die Luftdüse (46) durch einen Luftkanal in dem Auflagetisch (12) gebildet ist.

4. Plattenaufteilanlage (10) nach Anspruch 2, **dadurch gekennzeichnet, dass** die Luftdüse (46) in oder an einem Einsatz (48) gebildet ist, der in eine Öffnung (50) in dem Auflagetisch (12) eingesetzt ist.

5. Plattenaufteilanlage (10) nach einem der vorhergehenden Ansprüche, **dadurch gekennzeichnet, dass** der Auflagetisch (12) zumindest bereichsweise als Luftkissentisch mit einer Mehrzahl von Luftaustrittsöffnungen (88) ausgebildet ist.

6. Plattenaufteilanlage (10) nach Anspruch 5, **dadurch gekennzeichnet, dass** der Auflagetisch (12) im Bereich der Aufteillinie (22) mindestens einen Einsatz (48) aufweist, der in eine Öffnung (50) des Auflagetisches (12) eingesetzt ist und sowohl eine Luftaustrittsöffnung (88) als auch eine Luftdüse (46) aufweist.

7. Plattenaufteilanlage (10) nach Anspruch 6, **dadurch gekennzeichnet, dass** der Einsatz (48) einen topfartigen und oben offenen Basisabschnitt (52) und einen mit diesem verbundenen Schließabschnitt (60) mit einem Deckelabschnitt (62) und einem sich axial in den Basisabschnitt (52) hinein erstreckenden Kragen (64) aufweist, wobei der Deckelabschnitt (62) an seiner Unterseite eine einseitige Ausnehmung (74) aufweist, durch welche die Luftdüse (46) gebildet wird.

8. Plattenaufteilanlage (10) nach Anspruch 7, **dadurch gekennzeichnet, dass** ein Rand (76) des Deckelabschnitts (62) im Bereich der Ausnehmung (74) gerade und ansonsten kreisförmig ist.

9. Plattenaufteilanlage (10) nach einem der Ansprüche 2 bis 8, **dadurch gekennzeichnet, dass** im Bereich der Luftdüse (46) in der Oberfläche des Auflagetisches (12) eine Ausnehmung (90) vorhanden ist, die in der Draufsicht eine Kontur aufweist, deren Mittelachse (92) zur zum Auflagetisch (12) parallelen und in der gewünschten Richtung weisenden Komponente (86) der Mittelachse (84) des Luftstrahls (40) parallel ist.

10. Plattenaufteilanlage (10) nach Anspruch 9, **dadurch gekennzeichnet, dass** die Ausnehmung (90) in der Draufsicht insgesamt eine wenigstens in etwa halbkreisförmige oder kreisringförmige oder konische Kontur hat.

11. Plattenaufteilanlage (10) nach einem der vorhergehenden Ansprüche, **dadurch gekennzeichnet, dass** sie eine parallel zur Aufteillinie (22) angeordnete Abschirmeinrichtung (94) aufweist, die einen Bereich unmittelbar seitlich von der Aufteillinie (22) von einem seitlich weiter entfernt angeordneten Bereich abschirmt.

12. Plattenaufteilanlage (10) nach einem der vorhergehenden Ansprüche, **dadurch gekennzeichnet, dass** sie eine Absaugeinrichtung (44) umfasst, die im Bereich der Aufteillinie (22) und auf jener Seite des Auflagetisches (12) angeordnet ist, zu der hin die zum Auflagetisch (12) und zur Aufteillinie (22) parallele Komponente der Mittelachse (84 des Luftstrahls (40) der Luftdüse (46) gerichtet ist.

13. Plattenaufteilanlage (10) nach einem der vorhergehenden Ansprüche, **dadurch gekennzeichnet, dass** die Luftdüse (46) um eine zur Ebene des Auflagetisches (12) orthogonale Achse drehbar ist.

14. Plattenaufteilanlage (10) nach einem der vorhergehenden Ansprüche, **dadurch gekennzeichnet, dass** sie auf beiden Seiten der Aufteillinie (22) mindestens eine Luftdüse (46) aufweist.

15. Plattenaufteilanlage (10) nach einem der vorhergehenden Ansprüche, **dadurch gekennzeichnet, dass** die Luftdüse (46) oder die Lüftdüsen (46) an eine eigene Druckluftzufuhr (82) angeschlossen ist bzw. sind.

## Claims

1. A panel dividing system (10) for dividing apart panel-like workpieces (14), having a supporting table (12) for placing the workpieces (14) on and having a dividing line (22), along which the workpieces (14) are cut apart, wherein the panel dividing system has at least one air nozzle (46) connected to a compressed air supply (82), the nozzle being located in the supporting table (12) in a top side of the supporting table (12) in a region next to the dividing line (22), **characterized in that** the air nozzle (46) on the top side of the supporting table (12) generates a directional air stream (40) emerging from the air nozzle (46) and having a center axis (84) which has a component (86) that is parallel to the top side of the supporting table (12) and points in a direction in which chips produced in the dividing process are to be carried away.

2. The panel dividing system (10) of claim 1, **characterized in that** the component (86) parallel to the top side of the supporting table (12) is approximately parallel to the dividing line (22).

3. The panel dividing system (10) of claim 2, **characterized in that** the air nozzle (46) is formed by an air duct in the supporting table (12).

4. The panel dividing system (10) of claim 2, **characterized in that** the air nozzle (46) is formed in or on an insert (48) that is inserted into an opening (50) in the supporting table (12).

5. The panel dividing system (10) of one of the foregoing claims, **characterized in that** the supporting table (12) is embodied in at least some regions as an air-cushion table having a plurality of air outlet openings (88).

6. The panel dividing system (10) of claim 5, **characterized in that** the supporting table (12), in the vicinity of the dividing line (22), has at least one insert (48), which is inserted into an opening (50) of the supporting table (12) and has both a air outlet opening (88) and an air nozzle (46).

7. The panel dividing system (10) of claim 6, **characterized in that** the insert (48) has a cup-like base portion (52), open at the top, and a closing portion (60) joined to it, with a lid portion (62) and a collar (64) extending axially into the base portion (52), and the lid portion (62) on its underside has a recess (74) on one side by which the air nozzle (46) is formed.

8. The panel dividing system (10) of claim 7, **characterized in that** one edge (76) of the lid portion (62) is rectilinear in the vicinity of the recess (74) and otherwise is circular.

9. The panel dividing system (10) of one of claims 2 through 8, **characterized in that** in the vicinity of the air nozzle (46) in the upper surface of the supporting table (12), there is a recess (90), which in plan view has a contour the center axis (92) of which is parallel to the component (86) of the center axis (84) of the air stream (40), which component is parallel to the supporting table (12) and points in the desired direction.

10. The panel dividing system (10) of claim 9, **characterized in that** the recess (90) in plan view overall has an at least approximately semicircular or circular-annular or conical contour.

11. The panel dividing system (10) of one of the foregoing claims, **characterized in that** it has a shielding device (94), located parallel to the dividing line (22), which device shields off a region immediately laterally of the dividing line (22) from a region located laterally farther away.

12. The panel dividing system (10) of one of the foregoing claims, **characterized in that** it includes a suction device (44), which is located in the vicinity of the dividing line (22) and on the side of the supporting table (12) toward which the component, parallel to the supporting table (12) and to the dividing line (22), of the center axis (84) of the air stream (40) of the air nozzle (46) is aimed.

13. The panel dividing system (10) of one of the foregoing claims, **characterized in that** the air nozzle (46) is rotatable about an axis that is orthogonal to the plane of the supporting table (12).

14. The panel dividing system (10) of one of the foregoing claims, **characterized in that** it has at least one air nozzle (46) on both sides of the dividing line (22).

15. The panel dividing system (10) of one of the foregoing claims, **characterized in that** the air nozzle (46) or air nozzles (46) are each connected to their own compressed air supply (82).

## Revendications

1. Installation de division de panneaux (10) destinée à diviser des pièces (14) en forme de panneau, comprenant une table porte-pièce (12) destinée à y poser les pièces (14) et une ligne de division (22) le long de laquelle les pièces (14) sont divisées, dans laquelle elle présente au moins une buse à air (46) qui est raccordée à une alimentation en air comprimé (82) et qui est disposée dans ladite table porte-pièce (12) dans une face supérieure de la table porte-pièce (12) dans une zone située à côté de la ligne de division (22), **caractérisée par le fait que** la buse à air (46) génère sur la face supérieure de la table porte-pièce (12) un jet d'air (40) dirigé sortant de la buse à air (46) et ayant un axe médian (84) qui présente une composante (86) parallèle à la face supérieure de la table porte-pièce (12) et montrant dans une direction dans laquelle des copeaux produits lors de la division doivent être évacués.

2. Installation de division de panneaux (10) selon la revendication 1, **caractérisée par le fait que** la composante (86) parallèle à la face supérieure de la table porte-pièce (12) est à peu près parallèle à la ligne de division (22).

3. Installation de division de panneaux (10) selon la revendication 2, **caractérisée par le fait que** la buse à air (46) est constituée par un canal d'air dans la table porte-pièce (12).

4. Installation de division de panneaux (10) selon la revendication 2, **caractérisée par le fait que** la buse à air (46) est formée dans ou sur un insert (48) qui est inséré dans une ouverture (50) se trouvant dans la table porte-pièce (12).

5. Installation de division de panneaux (10) selon l'une quelconque des revendications précédentes, **caractérisée par le fait que** la table porte-pièce (12) est réalisée au moins par zones en tant que table à coussin d'air ayant une pluralité d'ouvertures de sortie d'air (88).

6. Installation de division de panneaux (10) selon la revendication 5, **caractérisée par le fait que** la table porte-pièce (12) présente au moins un insert (48) au niveau de la ligne de division (22), qui est inséré dans une ouverture (50) de la table porte-pièce (12) et qui présente aussi bien une ouverture de sortie d'air (88) qu'une buse à air (46).

7. Installation de division de panneaux (10) selon la revendication 6, **caractérisée par le fait que** ledit insert (48) présente une portion de base (52) de type pot et ouverte en haut ainsi qu'une portion de fermeture (60) reliée à celle-ci et ayant une portion de couvercle (62) et une collerette (64) s'étendant axialement dans la portion de base (52), la portion de couvercle (62) présentant, sur sa face inférieure, un évidement (74) unilatéral par lequel est formée ladite buse à air (46).

8. Installation de division de panneaux (10) selon la revendication 7, **caractérisée par le fait qu'**un bord (76) de la portion de couvercle (62) est droit au niveau de l'évidement (74) et est circulaire autrement.

9. Installation de division de panneaux (10) selon l'une quelconque des revendications 2 à 8, **caractérisée par le fait qu'**un évidement (90) est présent au niveau de la buse à air (46) dans la surface de la table porte-pièce (12), qui, vu de dessus, présente un contour dont l'axe médian (92) est parallèle à ladite composante (86) de l'axe médian (84) du jet d'air (40), qui est parallèle à la table porte-pièce (12) et montre dans la direction souhaitée.

10. Installation de division de panneaux (10) selon la revendication 9, **caractérisée par le fait que**, vu de dessus, l'évidement (90) présente dans l'ensemble un contour qui est au moins à peu près demi-circulaire ou en forme d'anneau de cercle ou conique.

11. Installation de division de panneaux (10) selon l'une quelconque des revendications précédentes, **caractérisée par le fait qu'**elle présente un dispositif de protection (94) qui est disposé parallèlement à la ligne de division (22) et qui protège une zone située immédiatement à côté de la ligne de division (22) contre une zone qui est latéralement plus éloignée.

12. Installation de division de panneaux (10) selon l'une quelconque des revendications précédentes, **caractérisée par le fait qu'**elle comprend un dispositif d'aspiration (44) qui est disposé au niveau de la ligne de division (22) et du côté de la table porte-pièce (12) vers lequel est orientée la composante de l'axe médian (84) du jet d'air (40) de la buse à air (46), laquelle est parallèle à la table porte-pièce (12) et à la ligne de division (22).

13. Installation de division de panneaux (10) selon l'une quelconque des revendications précédentes, **caractérisée par le fait que** la buse à air (46) est tournante autour d'un axe orthogonal au plan de la table porte-pièce (12).

14. Installation de division de panneaux (10) selon l'une quelconque des revendications précédentes, **caractérisée par le fait qu'**elle présente au moins une buse à air (46) des deux côtés de la ligne de division (22).

15. Installation de division de panneaux (10) selon l'une quelconque des revendications précédentes, **caractérisée par le fait que** la buse à air (46) ou les buses à air (46) est ou bien sont raccordée(s) à une propre alimentation en air comprimé (82).
